# EUROPEAN PATENT APPLICATION

(11) **EP 4 694 410 A1**
(43) Date of publication of application: **11.02.2026**
(21) Application number: 24806283.8
(22) Date of filing: 18.04.2024
(51) Int. Cl.: H04W 60/00

(54) **COMMUNICATION METHODS AND COMMUNICATION APPARATUS**

(30) Priority: 12.05.2023 CN 202310537534
(71) Applicant: Huawei Technologies Co., Ltd., Shenzhen, Guangdong 518129 (CN)
(72) Inventor: HU, Xiange, Shenzhen, Guangdong 518129 (CN); PREMAN, Vishnu, Shenzhen, Guangdong 518129 (CN); XU, Ling, Shenzhen, Guangdong 518129 (CN); JIANG, Debin, Shenzhen, Guangdong 518129 (CN); FAN, Jing, Shenzhen, Guangdong 518129 (CN)
(74) Representative: Pfenning, Meinig & Partner mbB
(86) International application number: PCT/CN2024/088616
(87) International publication number: WO 2024/234926

(57) **Abstract**

This application provides a communication method and a communication apparatus. The method includes: sending a registration request message; receiving a registration accept message, where the registration accept message carries first indication information, and the first indication information indicates to return a registration complete message after the registration accept message is received; and sending the registration complete message based on the registration accept message. This method helps ensure that an information element in a registration accept message between a network side and a terminal side is aligned, so that the terminal can perform normal communication. In addition, first indication information is carried to enable the terminal to return a registration complete message. This further helps improve system compatibility.

## Description

This application claims priority to Chinese Patent Application No. 202310537534.7, filed with the China National Intellectual Property Administration on May 12, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, a registration procedure of a terminal is generally as follows: The terminal sends a registration request message to a network side. The network side sends a registration accept message to the terminal, where the registration accept message includes an information element. For example, the information element may be a PEIPS parameter or an eDRX parameter. If the terminal fails to receive the registration accept message including the information element, the network side cannot perceive whether the terminal successfully receives the information element either, and the network side does not retransmit the registration accept message to the terminal. As a result, an information element between the network side and a terminal side is not aligned, affecting subsequent normal communication of the terminal.

### SUMMARY

This application provides a communication method and a communication apparatus, to help ensure that an information element in a registration accept message between a network side and a terminal side is aligned, so that a terminal can perform normal communication.

According to a first aspect, this application provides a communication method. The method may be performed by a terminal, or may be performed by a module (for example, a processor, a chip, or a chip system) used in a terminal, or may be implemented by a logical node, a logical module, or software that can implement all or some functions of a terminal. The communication method includes:
sending a registration request message; receiving a registration accept message, where the registration accept message carries first indication information, and the first indication information indicates to return a registration complete message after the registration accept message is received; and sending the registration complete message based on the registration accept message.

The method described in the first aspect helps ensure that an information element in a registration accept message between a network side and a terminal side is aligned, so that the terminal can perform normal communication. In addition, first indication information is carried to enable the terminal to return a registration complete message. This further helps improve system compatibility.

In a possible embodiment, the registration request message carries capability information of the terminal, and the capability information indicates support returning a registration complete message after a registration accept message is received.

This possible embodiment helps ensures compatibility with a terminal of an earlier-version protocol.

In a possible embodiment, the registration accept message further carries a paging early indication with paging subgrouping assistance PEIPS parameter or an extended discontinuous reception eDRX parameter.

Based on this possible embodiment, a PEIPS parameter between the network side and the terminal side can be aligned, so that the terminal can successfully receive a paging message or power consumption of the terminal can be saved. Alternatively, based on this possible embodiment, an eDRX parameter between the network side and the terminal side can be aligned, to prevent the terminal from losing downlink information.

According to a second aspect, this application provides a communication method. The method may be performed by a core network device, or may be performed by a module (for example, a processor, a chip, or a chip system) used in a core network device, or may be implemented by a logical node, a logical module, or software that can implement all or some functions of a core network device. The communication method includes:
receiving a registration request message from a terminal; sending a registration accept message to the terminal based on the registration request message, where the registration accept message carries first indication information, and the first indication information indicates to return a registration complete message after the registration accept message is received; starting a timer; and if the registration complete message from the terminal is received before the timer expires, stopping the timer; or if the registration complete message from the terminal fails to be received when the timer expires, retransmitting the registration accept message.

In a possible embodiment, the registration request message carries capability information of the terminal, and the capability information indicates support returning a registration complete message after a registration accept message is received.

In a possible embodiment, starting the timer includes: if the registration request message carries the capability information of the terminal, and the registration accept message carries the first indication information, starting the timer.

In a possible embodiment, the registration accept message further carries a paging early indication with paging subgrouping assistance PEIPS parameter or an extended discontinuous reception eDRX parameter.

For beneficial effect of the second aspect, refer to the beneficial effect of the first aspect. Details are not described herein.

According to a third aspect, this application provides a communication method. The method may be performed by a terminal, or may be performed by a module (for example, a processor, a chip, or a chip system) used in a terminal, or may be implemented by a logical node, a logical module, or software that can implement all or some functions of a terminal. The communication method includes:
sending a registration request message; receiving a registration accept message; and if the registration accept message carries a paging early indication with paging subgrouping assistance PEIPS parameter or an extended discontinuous reception eDRX parameter, sending a registration complete message.

It can be learned that, the method described in the third aspect helps ensure that a PEIPS parameter or an eDRX parameter in a registration accept message between a network side and a terminal side is aligned, so that the terminal can perform normal communication.

In a possible embodiment, the method further includes: determining that the registration accept message carries the PEIPS parameter or the eDRX parameter.

In a possible embodiment, the registration request message carries capability information of the terminal, and the capability information indicates support returning a registration complete message after a registration accept message that carries a PEIPS parameter or an eDRX parameter is received.

This possible embodiment helps ensure compatibility with a terminal of an earlier-version protocol.

According to a fourth aspect, this application provides a communication method. The method may be performed by a core network device, or may be performed by a module (for example, a processor, a chip, or a chip system) used in a core network device, or may be implemented by a logical node, a logical module, or software that can implement all or some functions of a core network device. The communication method includes:
receiving a registration request message from a terminal; sending a registration accept message to the terminal based on the registration request message; if the registration accept message carries a paging early indication with paging subgrouping assistance PEIPS parameter or an extended discontinuous reception eDRX parameter, starting a timer; and if a registration complete message from the terminal is received before the timer expires, stopping the timer; or if a registration complete message from the terminal fails to be received when the timer expires, retransmitting the registration accept message.

In a possible embodiment, the registration request message carries capability information of the terminal, and the capability information indicates support returning a registration complete message after a registration accept message that carries a PEIPS parameter or an eDRX parameter is received.

In a possible embodiment, if the registration accept message carries the paging early indication with paging subgrouping assistance PEIPS parameter or the extended discontinuous reception eDRX parameter, starting the timer includes: if the registration request message carries the capability information of the terminal, and the registration accept message carries the paging early indication with paging subgrouping assistance PEIPS parameter or the extended discontinuous reception eDRX parameter, starting the timer.

For beneficial effect of the fourth aspect, refer to the beneficial effect of the third aspect. Details are not described herein.

According to a fifth aspect, this application provides a communication method. The method may be performed by a terminal, or may be performed by a module (for example, a processor, a chip, or a chip system) used in a terminal, or may be implemented by a logical node, a logical module, or software that can implement all or some functions of a terminal. The communication method includes:
sending a registration request message, where the registration request message carries capability information of the terminal, and the capability information indicates support paging early indication with paging subgrouping assistance PEIPS; starting a timer; and if a registration accept message fails to be received when the timer expires, monitoring a paging message of the terminal on a paging occasion in a discontinuous reception DRX cycle.

The method described in the fifth aspect helps prevent the terminal from losing the paging message.

In a possible embodiment, before sending the registration request message, the method further includes: monitoring the paging message of the terminal in a paging subgroup, where the paging subgroup is a user equipment identifier UE_ID subgroup or a PEIPS paging subgroup, and the terminal is located in the paging subgroup.

This possible embodiment helps prevent the terminal from losing the paging message.

According to a sixth aspect, this application provides a communication method. The method may be performed by a terminal, or may be performed by a module (for example, a processor, a chip, or a chip system) used in a terminal, or may be implemented by a logical node, a logical module, or software that can implement all or some functions of a terminal. The communication method includes:
sending a registration request message, where the registration request message carries capability information of the terminal, the capability information includes first indication information, and the first indication information indicates support paging early indication with paging subgrouping assistance PEIPS; receiving a registration accept message, where the registration accept message carries a PEIPS parameter; and when a value of the PEIPS parameter is not within a valid value range supported by the terminal, monitoring a paging message of the terminal on a paging occasion in a discontinuous reception DRX cycle, or monitoring a paging message of the terminal in a specific PEIPS paging subgroup.

Based on the method described in the sixth aspect, when the value of the PEIPS parameter is not within the valid value range supported by the terminal, the terminal may monitor the paging message of the terminal in conventional paging monitoring. This helps prevent the terminal from losing the paging message.

In a possible embodiment, the capability information further includes the valid value range that is of the PEIPS parameter and that is supported by the terminal. This possible embodiment helps reduce power consumption of a core network device.

According to a seventh aspect, this application provides a communication method. The method may be performed by a core network device, or may be performed by a module (for example, a processor, a chip, or a chip system) used in a core network device, or may be implemented by a logical node, a logical module, or software that can implement all or some functions of a core network device. The communication method includes:
receiving a registration request message from a terminal, where the registration request message carries capability information of the terminal, the capability information includes first indication information, and the first indication information indicates support paging early indication with paging subgrouping assistance PEIPS; sending a registration accept message based on the registration request message, where the registration accept message carries a PEIPS parameter; and paging the terminal in a specific PEIPS paging subgroup and a PEIPS paging subgroup corresponding to the PEIPS parameter.

In a possible embodiment, the capability information further includes a valid value range that is of the PEIPS parameter and that is supported by the terminal, and paging the terminal in the specific PEIPS paging subgroup and the PEIPS paging subgroup corresponding to the PEIPS parameter includes: when a value of the PEIPS parameter is not within the valid value range supported by the terminal, paging the terminal in the specific PEIPS paging subgroup and the PEIPS paging subgroup corresponding to the PEIPS parameter.

For beneficial effect of the seventh aspect, refer to the beneficial effect of the sixth aspect. Details are not described herein.

According to an eighth aspect, this application provides a communication method. The method may be performed by a terminal, or may be performed by a module (for example, a processor, a chip, or a chip system) used in a terminal, or may be implemented by a logical node, a logical module, or software that can implement all or some functions of a terminal. The communication method includes:
sending a registration request message, where the registration request message carries capability information of the terminal, the capability information includes first indication information and a valid value range that is of a paging early indication with paging subgrouping assistance PEIPS parameter and that is supported by the terminal, and the first indication information indicates support PEIPS; and receiving a registration accept message, where the registration accept message carries the PEIPS parameter, and a value of the PEIPS parameter is within the valid value range.

The method described in the eighth aspect helps prevent the terminal from losing a paging message.

According to a ninth aspect, this application provides a communication method. The method may be performed by a core network device, or may be performed by a module (for example, a processor, a chip, or a chip system) used in a core network device, or may be implemented by a logical node, a logical module, or software that can implement all or some functions of a core network device. The communication method includes:
receiving a registration request message, where the registration request message carries capability information of a terminal, the capability information includes first indication information and a valid value range that is of a paging early indication with paging subgrouping assistance PEIPS parameter and that is supported by the terminal, and the first indication information indicates support PEIPS; and sending a registration accept message based on the registration request message, where the registration accept message carries the PEIPS parameter, and a value of the PEIPS parameter is within the valid value range.

The method described in the ninth aspect helps prevent the terminal from losing a paging message.

According to a tenth aspect, this application provides a communication method. The method may be performed by a terminal, or may be performed by a module (for example, a processor, a chip, or a chip system) used in a terminal, or may be implemented by a logical node, a logical module, or software that can implement all or some functions of a terminal. The communication method includes:
receiving downlink information based on an extended discontinuous reception eDRX parameter; sending a registration request message, where the registration request message carries capability information, and the capability information indicates support eDRX; starting a timer; and if a registration accept message fails to be received when the timer expires, receiving the downlink information based on a discontinuous reception DRX parameter.

The method described in the tenth aspect helps prevent the terminal from losing the downlink information.

According to an eleventh aspect, this application provides a communication apparatus. For example, the communication apparatus may be a terminal or a module, for example, a processor, a chip, or a chip system, used in a terminal, or may be a logical node, a logical module, or software that can implement all or some functions of a terminal. The communication apparatus includes a module/unit configured to perform any method in the first aspect, the third aspect, the fifth aspect, the sixth aspect, the eighth aspect, the tenth aspect, or the possible implementations of the first aspect, the third aspect, the fifth aspect, the sixth aspect, the eighth aspect, or the tenth aspect.

According to a twelfth aspect, this application provides a communication apparatus. For example, the communication apparatus may be a core network device or a module, for example, a processor, a chip, or a chip system, used in a core network device, or may be a logical node, a logical module, or software that can implement all or some functions of a core network device. The communication apparatus includes a module/unit configured to perform any method in the second aspect, the fourth aspect, the seventh aspect, the ninth aspect, or the possible implementations of the second aspect, the fourth aspect, the seventh aspect, or the ninth aspect.

According to a thirteenth aspect, this application provides a communication apparatus, including a processor. The processor is coupled to a memory, the memory is configured to store a program or instructions, and when the program or the instructions are executed by the processor, the apparatus is enabled to perform the method in any one of the first aspect to the tenth aspect.

According to a fourteenth aspect, this application provides a chip. The chip includes a processor and an interface, the processor is coupled to the interface, the interface is configured to receive or output a signal, and the processor is configured to execute code instructions, so that the chip performs the method in any one of the first aspect to the tenth aspect.

According to a fifteenth aspect, this application provides a computer-readable storage medium. The computer-readable storage medium stores computer-executable instructions, and when the computer-executable instructions are invoked, any one of the first aspect to the tenth aspect is performed.

According to a sixteenth aspect, this application provides a computer program product. The computer program product includes computer program code, and when the computer program code is run, any one of the first aspect to the tenth aspect is performed.

According to a seventeenth aspect, this application provides a communication system. The communication system includes a communication apparatus (for example, a terminal) configured to perform the method in the first aspect and a communication apparatus (for example, an access network device) configured to perform the method in the second aspect, or the communication system includes a communication apparatus (for example, a terminal) configured to perform the method in the third aspect and a communication apparatus (for example, an access network device) configured to perform the method in the fourth aspect, or the communication system includes a communication apparatus (for example, a terminal) configured to perform the method in the sixth aspect and a communication apparatus (for example, an access network device) configured to perform the seventh aspect, or the communication system includes a communication apparatus (for example, a terminal) configured to perform the method according to the eighth aspect and a communication apparatus (for example, an access network device) configured to perform the ninth aspect.

### BRIEF DESCRIPTION OF DRAWINGS

FIG. 1 is a diagram of a possible and non-limiting system according to this application;
FIG. 2 is a schematic flowchart of a communication method according to this application;
FIG. 3 is a schematic flowchart of a communication method according to this application;
FIG. 4 is a schematic flowchart of a communication method according to this application;
FIG. 5 is a schematic flowchart of a communication method according to this application;
FIG. 6 is a schematic flowchart of a communication method according to this application;
FIG. 7 is a schematic flowchart of a communication method according to this application;
FIG. 8 is a schematic flowchart of a communication method according to this application;
FIG. 9 is a schematic flowchart of a communication method according to this application;
FIG. 10 is a schematic flowchart of a communication method according to this application;
FIG. 11 is a schematic flowchart of a communication method according to this application;
FIG. 12 is a diagram of a structure of a communication apparatus according to this application; and
FIG. 13 is a diagram of a structure of another communication apparatus according to this application.

### DESCRIPTION OF EMBODIMENTS

The following further describes specific embodiments of this application in detail with reference to accompanying drawings.

In the specification, claims, and accompanying drawings of this application, terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

In this application, "at least one (piece)" means one or more, "a plurality of" means two or more, "at least two (pieces)" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

In this application, "sending information" may be understood as that a device sends information to another device, or may be understood as that a logical module in a device sends information to another logical module. For example, "the access network device sends information" may be understood as that the access network device sends information to another device (for example, a terminal), or may be understood as that a logical module 1 in the access network device sends information to a logical module 2 in the access network device.

In this application, "receiving information" may be understood as that a device receives information from another device, or may be understood as that a logical module in a device receives information from another logical module. For example, "the access network device receives information" may be understood as that the access network device receives information from another device (for example, a terminal), or may be understood as that a logical module 1 in the access network device receives information from a logical module 2 in the access network device.

In this application, "sending information to... (for example, a terminal)" or a related illustration in the accompanying drawings may be understood as that a destination of the information is the terminal, and may include directly or indirectly sending information to the terminal. "Receiving information from... (for example, a terminal)" or "receiving information sent by (for example, a terminal)" or a related schematic diagram in the accompanying drawings may be understood as that a source of the information is the terminal, and may include directly or indirectly receiving information from the terminal. The information may undergo necessary processing between the source for sending the information and the destination, for example, a format change. However, the destination may understand valid information from the source. A similar expression in this application may be understood similarly. Details are not described herein again.

To better understand embodiments of this application, the following first describes a system architecture in embodiments of this application.

Embodiments of this application may be applied to a wireless communication system such as a long term evolution (long term evolution, LTE) system, a 5th generation mobile communication (5th generation mobile communication, 5G) system, a communication system evolved after 5G, for example, a 6th generation mobile communication (6th generation mobile communication, 6G) system, a satellite communication system, or a short-range communication system. The wireless communication system mentioned in embodiments of this application includes but is not limited to three application scenarios of the 5G/6G mobile communication system: enhanced mobile broadband (enhanced mobile broadband, eMBB), ultra-reliable and low-latency communication (ultra reliable low latency communication, URLLC), massive machine type communication (massive machine type of communication, mMTC), a long-range internet of things (long range, LoRa) system, or an internet of vehicles system. The wireless communication system may include one or more access network devices and one or more terminal devices.

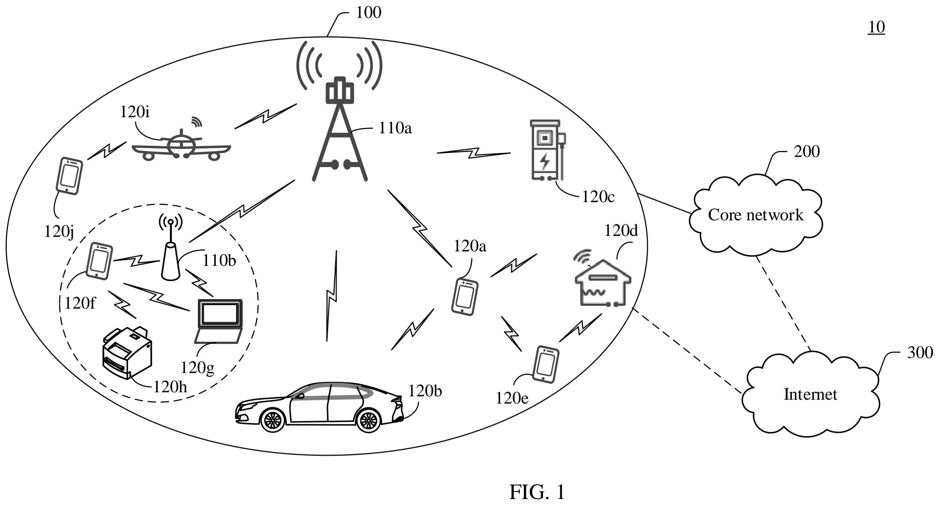

FIG. 1 is a diagram of a possible and non-limiting system. As shown in FIG. 1, a communication system 10 includes a radio access network (radio access network, RAN) 100, a core network (core network, CN) 200, and an internet 300.

### 1. RAN 100

The RAN 100 includes at least one RAN node (for example, 110a and 110b in FIG. 1, collectively referred to as 110) and at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices respectively, or may be a same physical device that integrates a core network logical function and a radio access network logical function.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

### (1) RAN node 110

The RAN node 110 may also be referred to as an access network device, a RAN entity, an access node, or the like sometimes, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative to each other. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, the RAN node 110 and the terminal 120 are both referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node 110 may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node 110 may be a macro base station (for example, 110a in FIG. 1), a micro base station or an indoor station (for example, 110b in FIG. 1), a relay node or a donor node, or a radio controller in a CRAN scenario. In a possible embodiment, the RAN node 110 may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some functions of the RAN node 110 in this application may alternatively be implemented by using a software function running on hardware, or may be implemented by using an instantiated virtualization function on a platform (for example, a cloud platform). Alternatively, the RAN node 110 in this application may be a logical node, a logical module, or software that can implement all or some functions of the RAN node 110.

In another possible scenario, a plurality of RAN nodes 110 coordinate to assist the terminal in implementing radio access, and different RAN nodes 110 separately implement a part of functions of the base station. For example, the RAN node 110 may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but persons skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the RAN node 110 is not limited. An apparatus configured to implement a function of the RAN node 110 may be the RAN node 110, or may be an apparatus that can support the RAN node 110 in implementing the function, for example, a chip system. The apparatus may be installed in the RAN node 110 or used in cooperation with the RAN node 110.

For ease of description, the RAN node 110 is referred to as an access network device for short below for description.

### (2) Terminal

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like.

In embodiments of this application, a form of the terminal is not limited. An apparatus configured to implement a function of the terminal may be the terminal, or may be an apparatus that can support the terminal in implementing the function, for example, a chip system. The apparatus may be installed in the terminal or used in cooperation with the terminal.

### 2. Core network 200

The core network 200 may be used to implement three major functions of registration, connection, and session management. The core network 200 includes a core network device. For example, the core network device may include an AMF. The AMF network element is mainly responsible for mobility management in a mobile network, such as user location update, user network registration, and user switching.

Optionally, the core network device may further include one or more of the following: a network slice selection function (network slice selection function, NSSF), a network exposure function (network exposure function, NEF), a network repository function (network repository function, NRF), a policy control function (policy control function, PCF), a unified data management (unified data management, UDM) network element, an application function (application function, AF), a network slice and SNPN identity authentication and authorization function (NSSAAF), an authentication server function (authentication server function, AUSF), an access and mobility management function (access and mobility management function, AMF), a session management function (session management function, SMF), a service communication agent (service communication proxy, SCP), a network slice admission control function (network slice admission control function, NSACF), a user plane function (user plane function, UPF), a unified data repository (unified data repository, UDR), and the like.

In embodiments of this application, a form of the core network device is not limited. An apparatus configured to implement a function of the core network device may be the core network device, or may be an apparatus that can support the core network device in implementing the function, for example, a chip system. The apparatus may be installed in the core network device or used in cooperation with the core network device.

To facilitate understanding of content of this solution, the following further explains and describes some terms in embodiments of this application, so as to facilitate understanding by persons skilled in the art. This part is merely for ease of understanding, and cannot be considered as a disclosure or a specific limitation on the technical solutions of this application.
1. Paging (paging): A paging technology is an important technology in a wireless communication system. A network device may find a terminal through paging and initiate a service to the terminal.
2. Paging monitoring based on a PEIPS paging subgroup
   The paging monitoring based on the PEIPS paging subgroup may also be referred to as paging monitoring based on paging early indication with paging subgrouping assistance (paging early indication with paging subgrouping assistance, PEIPS) or may be referred to as paging monitoring based on a core network subgroup. A core network allocates a terminal to a group and allocates a paging subgroup identifier (paging subgroup id). For example, a valid value range of the paging subgroup identifier may be (0 to 7), and there are eight groups in total. The terminal only needs to monitor a paging message of the terminal in a PEIPS paging subgroup configured by a network.
3. Paging monitoring based on a user equipment identifier (UE_ID) subgroup
   In the paging monitoring based on the UE_ID subgroup, an access network device allocates a terminal to a group in a specific manner, and then configures UE_ID-based subgrouping information for the terminal through a system message. The group may be referred to as the UE_ID subgroup or a UE_ID paging subgroup. Subsequently, the terminal monitors a paging message of the terminal in the UE_ID subgroup. For the paging monitoring based on the UE_ID subgroup, refer to descriptions in chapter 7 in 3GPP 38.304. Details are not described herein.
4. Conventional paging monitoring

In the conventional paging monitoring, a terminal monitors a paging message of the terminal on a paging occasion (paging occasion, PO) in a discontinuous reception (discontinuous reception, DRX) cycle. For one terminal device, each paging cycle includes one PO. A location of paging downlink control information (paging downlink control information, paging DCI) and/or a location of the paging message are/is referred to as the PO. One paging occasion includes the location of the paging DCI and a time domain location of the paging message. The terminal device may calculate, based on a related parameter (for example, identification number information of the terminal device and a paging-related parameter provided through a system message), a PO corresponding to the terminal device, so that the terminal device receives the paging DCI and the paging message on the corresponding PO.

The paging DCI is used to schedule the paging message, that is, the paging DCI indicates a time-frequency resource of the paging message. After receiving the paging DCI, the terminal device may receive the paging message based on the time-frequency resource that is of the paging message and that is indicated by the paging DCI.

The paging message is carried on a paging physical downlink shared channel (paging physical downlink shared channel, paging PDSCH), and is used to page the terminal device. The paging message includes an identifier of the paged terminal device. In other words, if an identifier of a terminal device is included in the paging message, it indicates that the terminal device is paged by a network device.

### 5. Extended discontinuous reception (extended discontinuous reception, eDRX)

DRX in LTE is introduced to a 5G system, and is extended to the eDRX, to help a terminal not frequently wake up to monitor paging or downlink information of a network, thereby reducing power consumption of the terminal.

The following further describes a communication method and the communication apparatus with reference to the accompanying drawings. It may be understood that, in this application, an example in which a core network device and a terminal are used as execution bodies of an interaction example is used for description. However, an execution body of the interaction example is not limited in this application. For example, the core network device in the method provided in this application may alternatively be a chip, a chip system, or a processor used in the core network device, or may be a logical node, a logical module, or software that can implement all or some functions of the core network device. The terminal in the method provided in this application may alternatively be a chip, a chip system, or a processor used in the terminal, or may be a logical node, a logical module, or software that can implement all or some functions of the terminal.

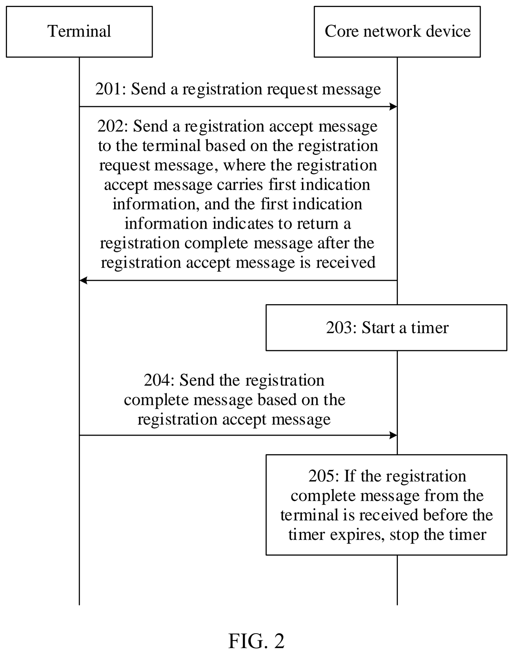

FIG. 2 is a schematic flowchart of a communication method according to an embodiment of this application.

201: A terminal sends a registration request (registration request) message. Correspondingly, a core network device may receive the registration request message.

Optionally, the core network device may be an AMF.

202: The core network device sends a registration accept (registration accept) message to the terminal based on the registration request message, where the registration accept message carries first indication information, and the first indication information indicates to return a registration complete message after the registration accept message is received.

Optionally, that the first indication information indicates to return the registration complete message after the registration accept message is received may also be understood as that the first indication information indicates that the terminal needs "information element acknowledgment". For example, the first indication information may be acknowledgment required.

In other words, if the terminal receives the registration accept message, and the terminal identifies that the registration accept message carries the first indication information, the terminal sends the registration complete message, to notify the core network device that the terminal has successfully received the registration accept message.

203: The core network device starts a timer.

In this embodiment of this application, after the core network device sends the registration accept message to the terminal, if the registration accept message carries the first indication information, the core network device starts the timer.

Optionally, the timer may be a T3550 or a timer of another duration. This is not limited in embodiments of this application.

204: The terminal sends the registration complete (registration complete) message based on the registration accept message.

In this embodiment of this application, if the terminal receives the registration accept message, and the terminal identifies that the registration accept message carries the first indication information, the terminal sends the registration complete message.

205: If the core network device receives the registration complete message from the terminal before the timer expires, the core network device stops the timer.

If the core network device receives the registration complete message from the terminal before the timer expires, it indicates that the terminal has successfully received the registration complete message. Therefore, the core network device stops the timer, and does not retransmit the registration accept message.

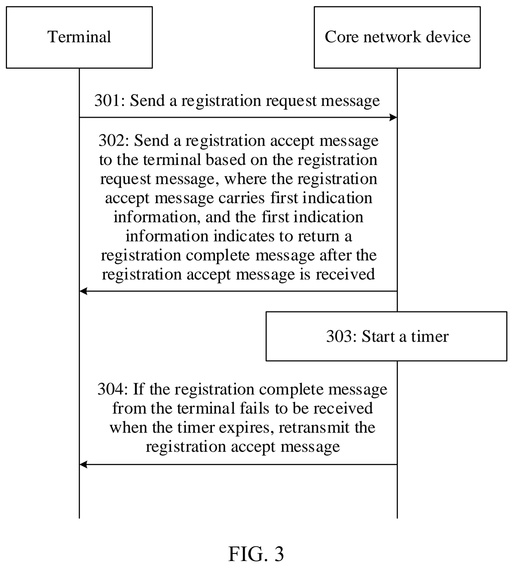

If the terminal fails to receive the registration complete message, the terminal does not send the registration complete message. If failing to receive the registration complete message from the terminal when the timer expires, the core network device retransmits the registration accept message, so that the terminal and the core network device keep the information element in the registration accept message synchronized, for example, step 301 to step 304 shown in FIG. 3.

In a possible embodiment, the registration request message carries capability information of the terminal, and the capability information indicates that the terminal supports returning a registration complete message after a registration accept message is received.

Optionally, that the capability information indicates that the terminal supports returning a registration complete message after a registration accept message is received may also be understood as that the capability information indicates that the terminal supports "information element acknowledgment". For example, the capability information is acknowledgment supported.

It is assumed that the core network device sends the registration accept message that carries the first indication information to a terminal of an earlier-version protocol. The terminal of the earlier-version protocol cannot identify the first indication information in the registration accept message. If the information element carried in the registration accept message is not an information element that is specified in the protocol and for which a registration complete message needs to be returned, the terminal of the earlier-version protocol does not return the registration complete message after receiving the registration accept message. After sending the registration accept message, the core network device starts the timer to wait for the terminal of the earlier-version protocol to return the registration complete message, and the core network device may fail to receive the registration complete message from the terminal of the earlier-version protocol. As a result, the core network device keeps retransmitting the registration accept message.

The capability information may be used by the core network device to distinguish whether the terminal is a terminal of a new-version protocol or the terminal of the earlier-version protocol. The terminal includes the capability information in the registration request message, so that the core network device can know that the terminal is the terminal of the new-version protocol. If the terminal is the terminal of the new-version protocol, and the information element to be carried in the registration accept message is an information element (for example, a PEIPS parameter or an eDRX parameter) that needs to be aligned between the core network device and the terminal, the core network device includes the first indication information in the registration accept message. After the core network device sends the registration accept message, if the registration accept message carries the first indication information, the core network device starts the timer, to wait for the terminal to return the registration complete message.

If the terminal does not include the capability information in the registration request message, the core network device can know that the terminal is the terminal of the earlier-version protocol when the core network device finds that the registration request message does not carry the capability information. If the terminal is the terminal of the earlier-version protocol, the core network device does not include the first indication information in the registration accept message, and still determines, according to processing that is for the information element and that is specified in the earlier-version protocol, whether to start the timer after sending the registration accept message, to wait for the terminal to return the registration complete message. Therefore, carrying the capability information in the registration request message helps a system be compatible with the terminal of the earlier-version protocol.

In a possible embodiment, if the registration request message carries the capability information of the terminal, and the registration accept message carries the first indication information, the core network device starts the timer. This possible embodiment helps ensure compatibility with the terminal of the earlier-version protocol.

For example, only when determining that the registration request message carries the capability information, and the information element to be carried in the registration accept message is an information element (for example, a PEIPS parameter or an eDRX parameter) that needs to be aligned between the core network device and the terminal, the core network device includes the first indication information in the registration accept message. If the registration accept message sent by the core network device carries the first indication information, after sending the registration accept message, the core network device triggers starting of the timer to wait for the terminal to return the registration complete message.

If the terminal includes the capability information in the registration request message, but the information element to be carried in the registration accept message is not an information element that needs to be aligned between the core network device and the terminal, the registration accept message may not carry the first indication information. After sending the registration accept message, the core network device does not start the timer.

If the terminal does not include the capability information in the registration request message, the core network device does not include the first indication information in the registration accept message, and still determines, according to processing that is for the information element and that is specified in the earlier-version protocol, whether to start the timer after sending the registration accept message, to wait for the terminal to return the registration complete message.

In a possible embodiment, the registration accept message further carries the PEIPS parameter or the eDRX parameter.

For example, the PEIPS parameter may be a paging subgroup identifier. Alternatively, the PEIPS parameter may be another PEIPS-related parameter.

For another example, the eDRX parameter may be an eDRX cycle. Alternatively, the eDRX parameter may be another eDRX-related parameter.

Based on this possible embodiment, a PEIPS parameter between a network side and a terminal side can be aligned, so that the terminal can successfully receive a paging message or power consumption of the terminal can be saved. Alternatively, based on this possible embodiment, an eDRX parameter between a network side and a terminal side can be aligned, to prevent the terminal from losing downlink information.

In a possible embodiment, the terminal and the core network device may exchange information via an access network device. For example, the terminal may send a registration request message to the core network device via the access network device. Correspondingly, the core network device may receive the registration request message via the access network device. For another example, the core network device may send a registration accept message to the terminal via the access network device. Correspondingly, the terminal may receive the registration accept message via the access network device. For another example, the terminal may send a registration complete message to the core network device via the access network device. Correspondingly, the core network device may receive the registration complete message via the access network device. This is similar in the following embodiments. Details are not described below again.

It can be learned that the method described in FIG. 2 helps ensure that an information element in a registration accept message between the network side and the terminal side is aligned, so that the terminal can perform normal communication. In addition, first indication information is carried to enable the terminal to return a registration complete message. This further helps improve system compatibility.

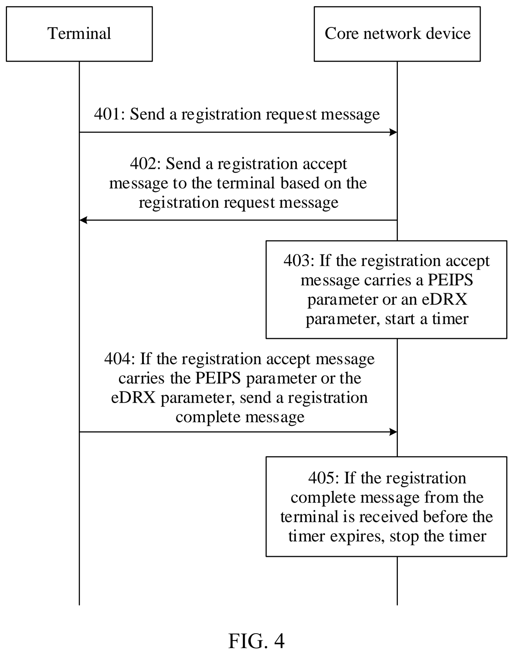

FIG. 4 is a schematic flowchart of another communication method according to an embodiment of this application.

401: A terminal sends a registration request message. Correspondingly, a core network device may receive the registration request message.

Optionally, the core network device may be an AMF.

402: The core network device sends a registration accept message to the terminal based on the registration request message.

For description of a PEIPS parameter or an eDRX parameter, refer to the foregoing description. Details are not described herein.

403: If the registration accept message carries the PEIPS parameter or the eDRX parameter, the core network device starts a timer.

In this embodiment of this application, after the core network device sends the registration accept message to the terminal, if the registration accept message carries the PEIPS parameter or the eDRX parameter, the core network device starts the timer.

Optionally, the timer may be a T3550 or a timer of another duration. This is not limited in embodiments of this application.

404: If the registration accept message carries the PEIPS parameter or the eDRX parameter, the terminal sends a registration complete message.

In other words, if the terminal receives the registration accept message, and the registration accept message carries the PEIPS parameter or the eDRX parameter, the terminal sends the registration complete message.

Optionally, before the terminal sends the registration complete message, the terminal determines that the registration accept message carries the PEIPS parameter or the eDRX parameter. In other words, if the terminal receives the registration accept message, and the terminal identifies that the registration accept message carries the PEIPS parameter or the eDRX parameter, the terminal sends the registration complete message.

Optionally, if the terminal receives the registration accept message, and the terminal does not identify that the registration accept message carries the PEIPS parameter or the eDRX parameter, the terminal determines, according to processing that is for an information element and that is specified in an earlier-version protocol, whether to send the registration complete message.

405: If receiving the registration complete message from the terminal before the timer expires, the core network device stops the timer.

If the core network device receives the registration complete message from the terminal before the timer expires, it indicates that the terminal has successfully received the registration complete message. Therefore, the core network device stops the timer, and does not retransmit the registration accept message.

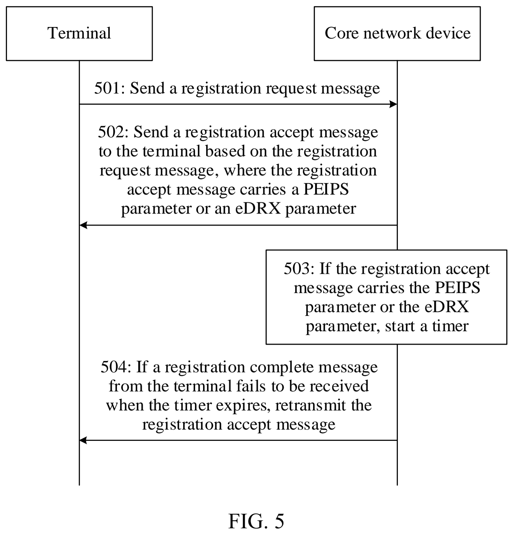

If the terminal fails to receive the registration complete message, the terminal does not send the registration complete message. If failing to receive the registration complete message from the terminal when the timer expires, the core network device retransmits the registration accept message, so that the terminal and the core network device keep the PEIPS parameter or the eDRX parameter in the registration accept message synchronized, for example, step 501 to step 504 shown in FIG. 5.

In a possible embodiment, the registration request message carries capability information of the terminal, and the capability information indicates support returning a registration complete message after a registration accept message that carries a PEIPS parameter or an eDRX parameter is received.

It is assumed that the core network device sends the registration accept message that carries the PEIPS parameter or the eDRX parameter to a terminal of an earlier-version protocol. After receiving the registration accept message that carries the PEIPS parameter or the eDRX parameter, the terminal of the earlier-version protocol may not return the registration complete message. For example, the registration accept message carries the PEIPS parameter or the eDRX parameter, and does not carry an information element that is specified in the protocol and for which a registration complete message needs to be returned. In this case, the terminal does not return the registration complete message after receiving the registration accept message. After sending the registration accept message, if the core network device starts the timer to wait for the terminal to return the registration complete message, the core network device may fail to receive the registration complete message from the terminal. As a result, the core network device keeps retransmitting the registration accept message.

The capability information may be used by the core network device to distinguish whether the terminal is a terminal of a new-version protocol or the terminal of the earlier-version protocol. The terminal includes the capability information in the registration request message, so that the core network device can know that the terminal is the terminal of the new-version protocol. If the terminal is the terminal of the new-version protocol, after sending the registration accept message that carries the PEIPS parameter or the eDRX parameter, the core network device triggers starting of the timer to wait for the terminal to return the registration complete message.

If the terminal does not include the capability information in the registration request message, the core network device can know that the terminal is the terminal of the earlier-version protocol. If the terminal is the terminal of the earlier-version protocol, after sending the registration accept message that carries the PEIPS parameter or the eDRX parameter, the core network device still determines, according to processing that is for the information element and that is specified in the earlier-version protocol, whether to start the timer after sending the registration accept message, to wait for the terminal to return the registration complete message. Therefore, carrying the capability information in the registration request message helps ensure compatibility with the terminal of the earlier-version protocol.

In a possible embodiment, if the registration accept message carries the paging early indication with paging subgrouping assistance PEIPS parameter or the extended discontinuous reception eDRX parameter, starting the timer includes: if the registration request message carries the capability information of the terminal, and the registration accept message carries the PEIPS parameter or the eDRX parameter, starting the timer. This possible embodiment helps ensure compatibility with the terminal of the earlier-version protocol.

For example, if the registration request message carries the capability information, and the registration accept message carries the PEIPS parameter or the eDRX parameter, the core network device triggers starting of the timer to wait for the terminal to return the registration complete message.

If the terminal does not carry the capability information in the registration request message, the core network device may determine, according to processing that is for the information element and that is specified in the earlier-version protocol, whether to start the timer after sending the registration accept message.

It can be learned that, the method described in FIG. 4 helps ensure that a PEIPS parameter or an eDRX parameter in a registration accept message between a network side and a terminal side is aligned, so that the terminal can perform normal communication.

After registration of the terminal fails, the terminal may lose a paging message of the terminal. For example, if the terminal has started paging monitoring based on a UE_ID subgroup before sending the registration request message, after the core network device sends the registration accept message that carries the PEIPS parameter, the terminal fails to receive the registration accept message. The core network device pages the terminal based on a PEIPS paging subgroup, but the terminal still monitors the paging message based on the UE_ID subgroup. As a result, the terminal cannot monitor the paging message of the terminal.

For another example, if the terminal has started paging monitoring based on a PEIPS paging subgroup before sending the registration request message, after the core network device sends a registration accept message that carries a new PEIPS parameter, the terminal fails to receive the registration accept message. The core network device pages the terminal based on a new PEIPS paging subgroup, but the terminal still monitors the paging message based on the old PEIPS paging subgroup. As a result, the terminal cannot monitor the paging message of the terminal. To prevent the terminal from losing the paging message of the terminal after registration of the terminal fails, an embodiment of this application provides a communication method. The following further describes the communication method.

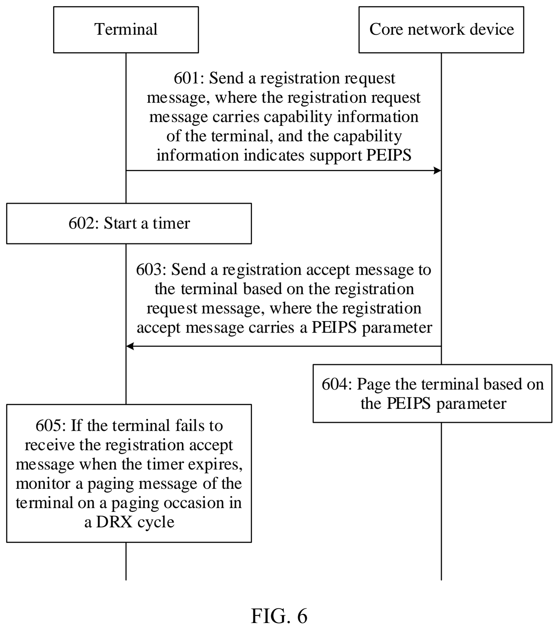

FIG. 6 is a schematic flowchart of another communication method according to an embodiment of this application.

601: A terminal sends a registration request message, where the registration request message carries capability information of the terminal, and the capability information indicates PEIPS. Correspondingly, a core network device may receive the registration request message.

602: The terminal starts a timer.

In this embodiment of this application, after sending the registration request message, the terminal may start the timer. If a registration accept message fails to be received when the timer expires, registration fails. If a registration accept message is received before the timer expires, registration succeeds.

Optionally, the timer may be a T3510 timer or another timer. This is not limited in embodiments of this application.

603: The core network device sends the registration accept message to the terminal based on the registration request message, where the registration accept message carries a PEIPS parameter.

604: The core network device pages the terminal based on the PEIPS parameter.

605: If the terminal fails to receive the registration accept message when the timer expires, the terminal monitors a paging message of the terminal on a paging occasion in a DRX cycle.

In other words, if registration of the terminal fails, the terminal monitors the paging message of the terminal in conventional paging monitoring. This helps prevent the terminal from losing the paging message. For description of the conventional paging monitoring, refer to the foregoing term description. Details are not described herein.

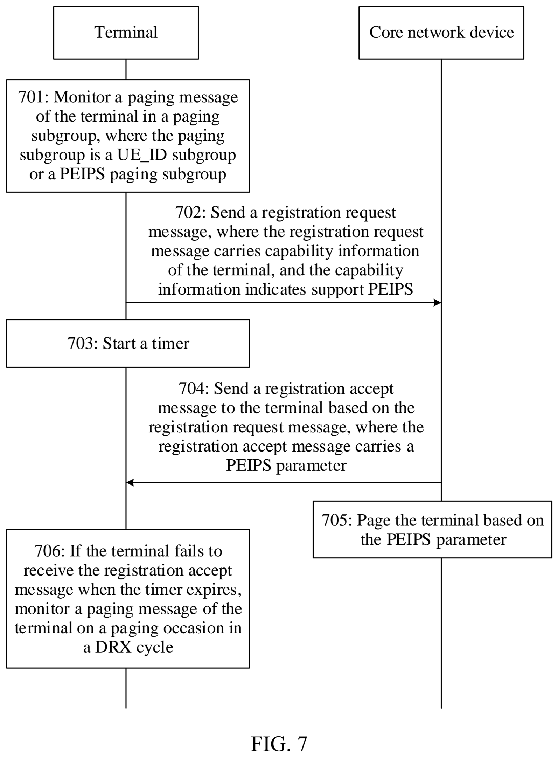

In a possible embodiment, before sending the registration request message, the terminal monitors the paging message of the terminal in a paging subgroup, where the paging subgroup is a UE_ID subgroup or a PEIPS paging subgroup, and the terminal is located in the paging subgroup, for example, as shown in 701 to 706 in FIG. 7.

In other words, before sending the registration request message, the terminal uses paging monitoring based on the UE_ID subgroup or the PEIPS paging subgroup. If registration fails, the conventional paging monitoring is rolled back. This helps prevent the terminal from losing the paging message.

Currently, a valid value range of a PEIPS paging subgroup identifier is 0 to 7. In the future, the valid value range of the PEIPS paging subgroup identifier may be extended, for example, extended to 0 to 10. After the valid value range of the PEIPS paging subgroup identifier is extended, a terminal of an earlier-version protocol may fail to receive a paging message of the terminal in some cases.

For example, it is assumed that the PEIPS paging subgroup identifier allocated by the core network device to the terminal is 8, that is, the core network device pages the terminal in a PEIPS paging subgroup 8. It is assumed that the terminal is the terminal of the earlier-version protocol. After receiving the PEIPS paging subgroup identifier allocated by the core network device to the terminal, the terminal finds that the PEIPS paging subgroup identifier does not within the valid value range, namely, 0 to 7, that is of the PEIPS paging subgroup identifier and that is supported by the terminal. In this case, the terminal of the earlier-version protocol monitors the paging message of the terminal in a PEIPS paging subgroup 0. However, the core network device pages the terminal in the PEIPS paging subgroup 8. As a result, the terminal cannot monitor the paging message of the terminal. To enable the terminal to successfully monitor the paging message of the terminal, an embodiment of this application further provides a communication method. The following further describes the communication method.

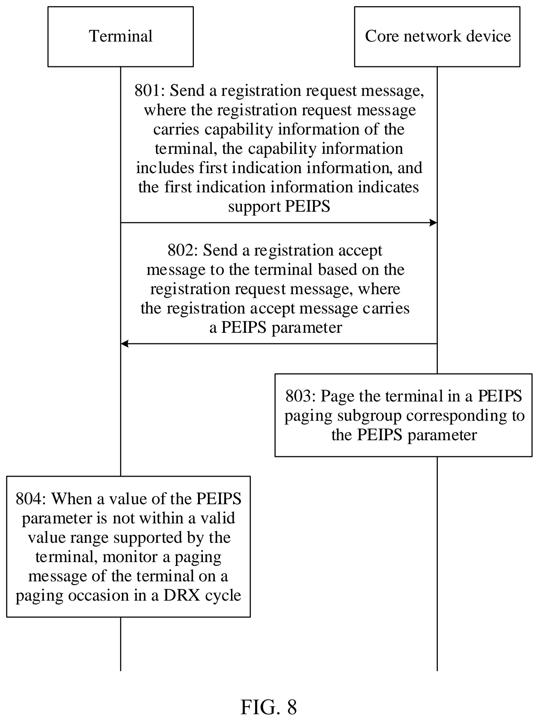

FIG. 8 is a schematic flowchart of another communication method according to an embodiment of this application.

801: A terminal sends a registration request message, where the registration request message carries capability information of the terminal, the capability information includes first indication information, and the first indication information indicates support PEIPS. Correspondingly, a core network device may receive the registration request message.

802: The core network device sends a registration accept message based on the registration request message, where the registration accept message carries a PEIPS parameter. Correspondingly, the terminal may receive the registration accept message.

For example, the PEIPS parameter may be a PEIPS paging subgroup identifier.

803: The core network device pages the terminal in a PEIPS paging subgroup corresponding to the PEIPS parameter.

In other words, after sending the carried PEIPS parameter to the terminal, the core network device may page the terminal in the PEIPS paging subgroup corresponding to the PEIPS parameter.

For example, the PEIPS parameter is the PEIPS paging subgroup identifier, and a value of the PEIPS parameter is 8. The core network device pages the terminal in a PEIPS paging subgroup 8.

804: When the value of the PEIPS parameter is not within a valid value range supported by the terminal, the terminal monitors a paging message of the terminal on a paging occasion in a DRX cycle.

For example, it is assumed that the value of the PEIPS parameter is 8, and the valid value range that is of the PEIPS parameter and that is supported by the terminal is 0 to 7. In this case, the terminal monitors the paging message of the terminal on the paging occasion in the DRX cycle, that is, the terminal monitors the paging message of the terminal in conventional paging monitoring.

Based on the method described in FIG. 8, when the value of the PEIPS parameter is not within the valid value range supported by the terminal, the terminal may monitor the paging message of the terminal in conventional paging monitoring. This helps prevent the terminal from losing the paging message.

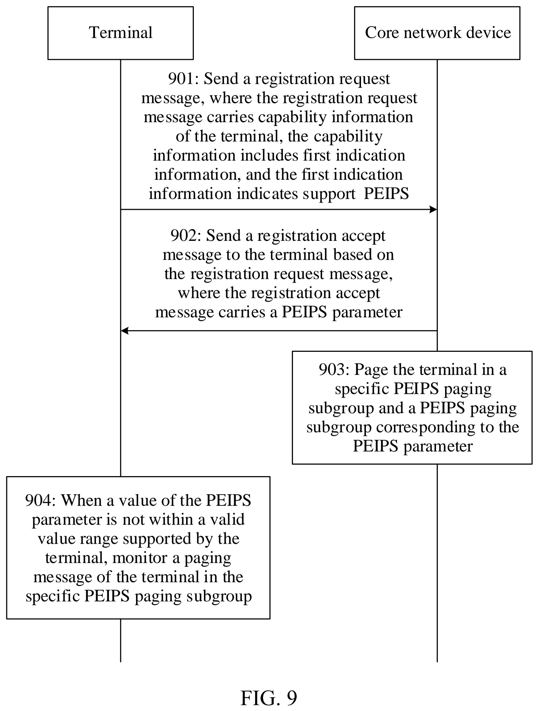

FIG. 9 is a schematic flowchart of another communication method according to an embodiment of this application.

901: A terminal sends a registration request message, where the registration request message carries capability information of the terminal, the capability information includes first indication information, and the first indication information indicates support PEIPS. Correspondingly, a core network device may receive the registration request message.

902: The core network device sends a registration accept message based on the registration request message, where the registration accept message carries a PEIPS parameter. Correspondingly, the terminal may receive the registration accept message.

For example, the PEIPS parameter may be a PEIPS paging subgroup identifier.

903: The core network device pages the terminal in a specific PEIPS paging subgroup and a PEIPS paging subgroup corresponding to the PEIPS parameter.

In other words, after sending the registration accept message that carries the PEIPS parameter to the terminal, the core network device may page the terminal in the specific PEIPS paging subgroup and the PEIPS paging subgroup corresponding to the PEIPS parameter. The specific PEIPS paging subgroup may be specified in a protocol. For example, the specific PEIPS paging subgroup is a PEIPS paging subgroup 0 or another PEIPS paging subgroup.

For example, the specific PEIPS paging subgroup is the PEIPS paging subgroup 0, and a value of the PEIPS parameter is 9. The core network device pages the terminal in the PEIPS paging subgroup 0 and a PEIPS paging subgroup 9.

904: When the value of the PEIPS parameter is not within a valid value range supported by the terminal, the terminal monitors a paging message of the terminal in the specific PEIPS paging subgroup.

For example, the specific PEIPS paging subgroup is the PEIPS paging subgroup 0, and the value of the PEIPS parameter is 9. The core network device pages the terminal in the PEIPS paging subgroup 0 and the PEIPS paging subgroup 9. When the valid value range that is of the PEIPS parameter and that is supported by the terminal is 0 to 7, the terminal monitors the paging message of the terminal in the PEIPS paging subgroup 0.

In a possible embodiment, the capability information of the terminal further includes the valid value range that is of the PEIPS parameter and that is supported by the terminal, and specific implementation in which the core network device pages the terminal in the specific PEIPS paging subgroup and the PEIPS paging subgroup corresponding to the PEIPS parameter is: when the value of the PEIPS parameter is not within the valid value range supported by the terminal, paging the terminal in the specific PEIPS paging subgroup and the PEIPS paging subgroup corresponding to the PEIPS parameter.

For example, the specific PEIPS paging subgroup is the PEIPS paging subgroup 0. If the value of the PEIPS parameter allocated by the core network device to the terminal is 8, and the valid value range that is of the PEIPS parameter and that is supported by the terminal is 0 to 7, the core network device pages the terminal in the PEIPS paging subgroup 0 and the PEIPS paging subgroup 8. If the value of the PEIPS parameter allocated by the core network device to the terminal is 6, and the valid value range that is of the PEIPS parameter and that is supported by the terminal is 0 to 7, the core network device pages the terminal in a PEIPS paging subgroup 6.

Based on this possible embodiment, only when the value of the PEIPS parameter is not within the valid value range supported by the terminal, the core network device pages the terminal in the specific PEIPS paging subgroup, and pages the terminal in the PEIPS paging subgroup corresponding to the PEIPS parameter, instead of always paging the terminal in the specific PEIPS paging subgroup and always paging the terminal in the PEIPS paging subgroup corresponding to the PEIPS parameter, thereby reducing power consumption of the core network device.

Based on the method described in FIG. 9, when the value of the PEIPS parameter is not within the valid value range supported by the terminal, the terminal can also monitor the paging message of the terminal in the specific PEIPS paging subgroup. Therefore, the method described in FIG. 9 helps prevent the terminal from losing the paging message.

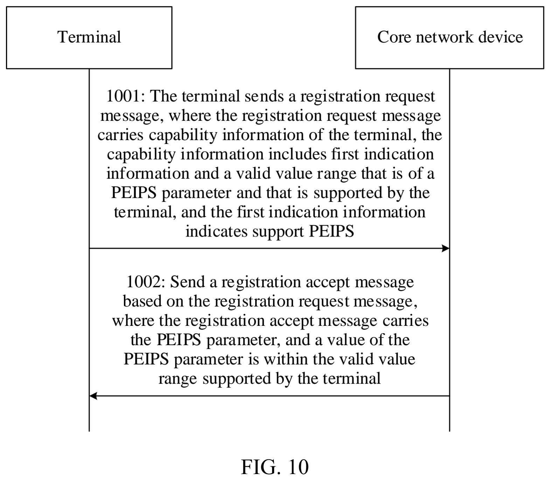

FIG. 10 is a schematic flowchart of another communication method according to an embodiment of this application.

1001: A terminal sends a registration request message, where the registration request message carries capability information of the terminal, the capability information includes first indication information and a valid value range that is of a PEIPS parameter and that is supported by the terminal, and the first indication information indicates support PEIPS. Correspondingly, a core network device may receive the registration request message.

1002: The core network device sends a registration accept message based on the registration request message, where the registration accept message carries the PEIPS parameter, and a value of the PEIPS parameter is within the valid value range supported by the terminal. Correspondingly, the terminal may receive the registration accept message.

In this embodiment of this application, the core network device may subsequently page the terminal in a PEIPS paging subgroup corresponding to the PEIPS parameter. Because the PEIPS parameter allocated by the core network device to the terminal is within the valid value range supported by the terminal, the terminal monitors a paging message of the terminal in the PEIPS paging subgroup corresponding to the PEIPS parameter. Therefore, the terminal may monitor the paging message of the terminal.

Therefore, the method described in FIG. 10 helps prevent the terminal from losing the paging message.

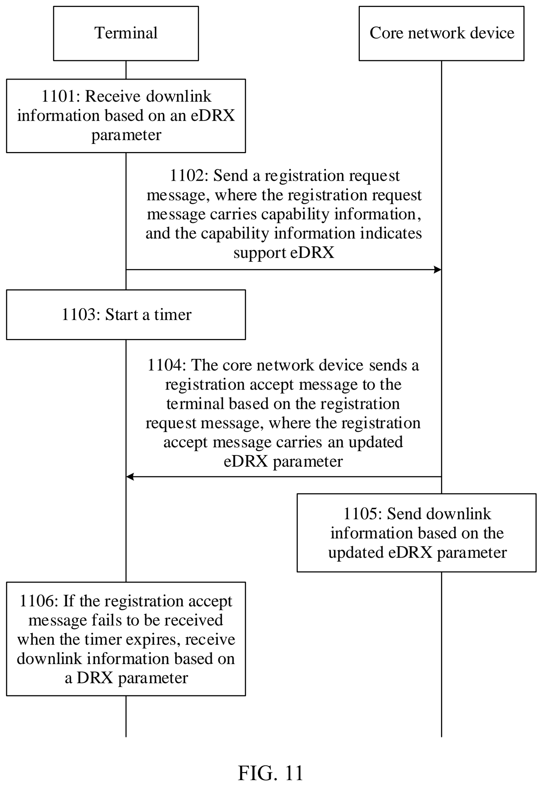

FIG. 11 is a schematic flowchart of another communication method according to an embodiment of this application.

1101: A terminal receives downlink information based on an eDRX parameter.

1102: The terminal sends a registration request message, where the registration request message carries capability information, and the capability information indicates support eDRX. Correspondingly, a core network device may receive the registration request message.

1103: The terminal starts a timer.

In this embodiment of this application, after sending the registration request message, the terminal may start the timer. If a registration accept message fails to be received when the timer expires, registration fails. If a registration accept message is received before the timer expires, registration succeeds.

Optionally, the timer may be a T3511 timer or another timer. This is not limited in embodiments of this application.

1104: The core network device sends the registration accept message to the terminal based on the registration request message, where the registration accept message carries an updated eDRX parameter.

1105: The core network device sends downlink information based on the updated eDRX parameter.

1106: If the registration accept message fails to be received when the timer expires, the terminal receives downlink information based on a DRX parameter.

If the terminal has started to receive the downlink information based on the eDRX parameter before sending the registration request message, after the core network device sends the registration accept message that carries the updated eDRX parameter, the terminal fails to receive the registration accept message. The core network device sends the downlink information to the terminal based on the updated eDRX parameter, and the terminal still receives the downlink information based on the old eDRX parameter. As a result, the terminal misses receiving the downlink information.

In this embodiment of this application, if the terminal fails to receive the registration accept message when the timer expires, the terminal receives the downlink information based on the DRX parameter. Because an eDRX cycle is a positive multiple of a DRX cycle, even if the core network device sends the downlink information to the terminal based on the updated eDRX parameter, the terminal may receive the downlink information of the terminal based on the DRX parameter.

It can be learned that, the method described in FIG. 11 helps prevent the terminal from losing the downlink information.

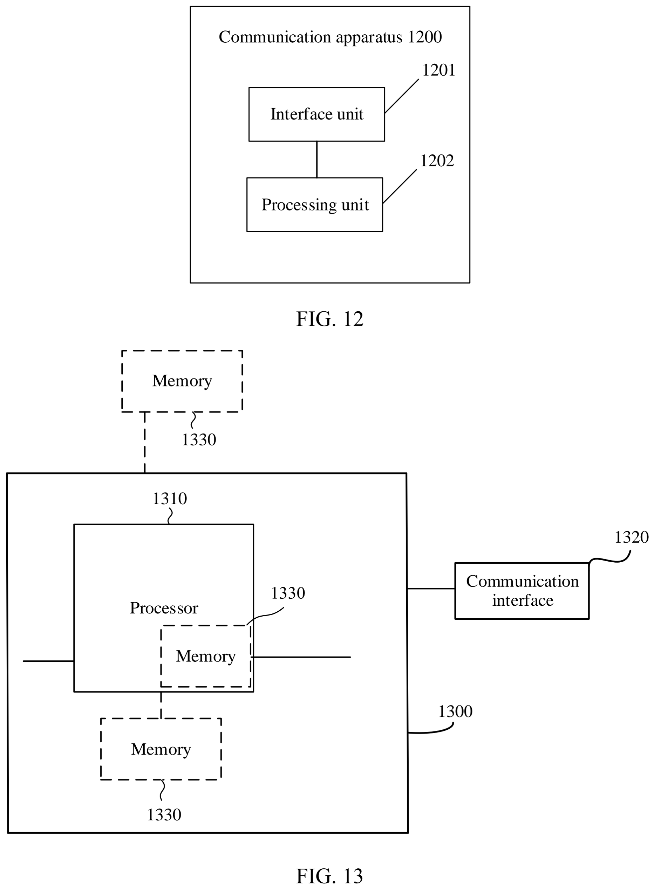

This application provides a communication apparatus. The communication apparatus may be configured to implement a function of the foregoing terminal or core network device. The communication apparatus may be a terminal or a core network device. The communication apparatus includes modules or units that one-to-one correspond to the methods/operations/steps/actions performed by the terminal or the core network device in the foregoing method embodiments. The unit may be implemented by a hardware circuit, software, or a combination of a hardware circuit and software. FIG. 12 is a diagram of a structure of a communication apparatus 1200 according to an embodiment of this application. The communication apparatus 1200 may include an interface unit 1201 and a processing unit 1202. Specifically, the processing unit 1202 is configured to process signaling and/or data. The signaling and/or data may be data received by the interface unit 1201, and the processed signaling and/or data may also be sent by the interface unit 1201.

In an implementation, when the communication apparatus 1200 is a terminal,
the interface unit 1201 is configured to send a registration request message;
the interface unit 1201 is further configured to receive a registration accept message, where the registration accept message carries first indication information, and the first indication information indicates to return a registration complete message after the registration accept message is received; and
the interface unit 1201 is further configured to send the registration complete message based on the registration accept message.

In a possible embodiment, the registration request message carries capability information of the terminal, and the capability information indicates support returning a registration complete message after a registration accept message is received.

In a possible embodiment, the registration accept message further carries a paging early indication with paging subgrouping assistance PEIPS parameter or an extended discontinuous reception eDRX parameter.

In an implementation, when the communication apparatus 1200 is a core network device,
the interface unit 1201 is configured to receive a registration request message from a terminal;
the interface unit 1201 is further configured to send a registration accept message to the terminal based on the registration request message, where the registration accept message carries first indication information, and the first indication information indicates to return a registration complete message after the registration accept message is received;
the processing unit 1202 is configured to start a timer; and
the processing unit 1202 is further configured to: if the registration complete message from the terminal is received before the timer expires, stop the timer; or
the interface unit 1201 is further configured to: if the registration complete message from the terminal fails to be received when the timer expires, retransmit the registration accept message.

In a possible embodiment, the registration request message carries capability information of the terminal, and the capability information indicates support returning a registration complete message after a registration accept message is received.

In a possible embodiment, that the processing unit 1202 starts the timer includes:
if the registration request message carries the capability information of the terminal, and the registration accept message carries the first indication information, starting the timer.

In a possible embodiment, the registration accept message further carries a paging early indication with paging subgrouping assistance PEIPS parameter or an extended discontinuous reception eDRX parameter.

In an implementation, when the communication apparatus 1200 is a terminal,
the interface unit 1201 is configured to send a registration request message;
the interface unit 1201 is further configured to receive a registration accept message; and
the interface unit 1201 is further configured to: if the registration accept message carries a paging early indication with paging subgrouping assistance PEIPS parameter or an extended discontinuous reception eDRX parameter, send a registration complete message.

In a possible embodiment, the processing unit 1202 is configured to determine that the registration accept message carries the PEIPS parameter or the eDRX parameter.

In a possible embodiment, the registration request message carries capability information of the terminal, and the capability information indicates support returning a registration complete message after a registration accept message that carries a PEIPS parameter or an eDRX parameter is received.

In an implementation, when the communication apparatus 1200 is a core network device,
the interface unit 1201 is configured to receive a registration request message from a terminal;
the interface unit 1201 is further configured to send a registration accept message to the terminal based on the registration request message;
the processing unit 1202 is configured to: if the registration accept message carries a paging early indication with paging subgrouping assistance PEIPS parameter or an extended discontinuous reception eDRX parameter, start a timer; and
the processing unit 1202 is further configured to: if a registration complete message from the terminal is received before the timer expires, stop the timer; or
the interface unit 1201 is further configured to: if a registration complete message from the terminal fails to be received when the timer expires, retransmit the registration accept message.

In a possible embodiment, the registration request message carries capability information of the terminal, and the capability information indicates support returning a registration complete message after a registration accept message that carries a PEIPS parameter or an eDRX parameter is received.

In a possible embodiment, if the registration accept message carries the paging early indication with paging subgrouping assistance PEIPS parameter or the extended discontinuous reception eDRX parameter, that the processing unit 1202 starts the timer includes:
if the registration request message carries the capability information of the terminal, and the registration accept message carries the paging early indication with paging subgrouping assistance PEIPS parameter or the extended discontinuous reception eDRX parameter, starting the timer.

In an implementation, when the communication apparatus 1200 is a terminal,
the interface unit 1201 is configured to send a registration request message, where the registration request message carries capability information of the terminal, and the capability information indicates support paging early indication with paging subgrouping assistance PEIPS;
the processing unit 1202 is configured to start a timer; and
the interface unit 1201 is further configured to: if a registration accept message fails to be received when the timer expires, monitor a paging message of the terminal on a paging occasion in a discontinuous reception DRX cycle.

In a possible embodiment, the interface unit 1201 is further configured to: before sending the registration request message, monitor the paging message of the terminal in a paging subgroup, where the paging subgroup is a user equipment identifier UE_ID subgroup or a PEIPS paging subgroup, and the terminal is located in the paging subgroup.

In an implementation, when the communication apparatus 1200 is a terminal,
the interface unit 1201 is configured to send a registration request message, where the registration request message carries capability information of the terminal, the capability information includes first indication information, and the first indication information indicates support paging early indication with paging subgrouping assistance PEIPS;
the interface unit 1201 is further configured to receive a registration accept message, where the registration accept message carries a PEIPS parameter; and
the interface unit 1201 is further configured to: when a value of the PEIPS parameter is not within a valid value range supported by the terminal, monitor a paging message of the terminal on a paging occasion in a discontinuous reception DRX cycle, or monitor a paging message of the terminal in a specific PEIPS paging subgroup.

In a possible embodiment, the capability information further includes the valid value range that is of the PEIPS parameter and that is supported by the terminal.

In an implementation, when the communication apparatus 1200 is a core network device,
the interface unit 1201 is configured to receive a registration request message from a terminal, where the registration request message carries capability information of the terminal, the capability information includes first indication information, and the first indication information indicates support paging early indication with paging subgrouping assistance PEIPS;
the interface unit 1201 is further configured to send a registration accept message based on the registration request message, where the registration accept message carries a PEIPS parameter; and
the interface unit 1201 is further configured to page the terminal in a specific PEIPS paging subgroup and a PEIPS paging subgroup corresponding to the PEIPS parameter.

In a possible embodiment, the capability information further includes a valid value range that is of the PEIPS parameter and that is supported by the terminal, and that the interface unit 1201 pages the terminal in the specific PEIPS paging subgroup and the PEIPS paging subgroup corresponding to the PEIPS parameter includes: when a value of the PEIPS parameter is not within the valid value range supported by the terminal, paging the terminal in the specific PEIPS paging subgroup and the PEIPS paging subgroup corresponding to the PEIPS parameter.

In an implementation, when the communication apparatus 1200 is a terminal,
the interface unit 1201 is configured to send a registration request message, where the registration request message carries capability information of the terminal, the capability information includes first indication information and a valid value range that is of a paging early indication with paging subgrouping assistance PEIPS parameter and that is supported by the terminal, and the first indication information indicates support PEIPS; and
the interface unit 1201 is further configured to receive a registration accept message, where the registration accept message carries the PEIPS parameter, and a value of the PEIPS parameter is within the valid value range.

In an implementation, when the communication apparatus 1200 is a core network device,
the interface unit 1201 is configured to receive a registration request message, where the registration request message carries capability information of a terminal, the capability information includes first indication information and a valid value range that is of a paging early indication with paging subgrouping assistance PEIPS parameter and that is supported by the terminal, and the first indication information indicates support PEIPS; and
the interface unit 1201 is further configured to send a registration accept message based on the registration request message, where the registration accept message carries the PEIPS parameter, and a value of the PEIPS parameter is within the valid value range.

In an implementation, when the communication apparatus 1200 is a terminal,
the interface unit 1201 is configured to send a registration request message, where the registration request message carries capability information, and the capability information indicates support extended discontinuous reception eDRX;
the interface unit 1201 is configured to start a timer; and
the interface unit 1201 is further configured to: if a registration accept message fails to be received when the timer expires, roll back from receiving downlink information based on the eDRX parameter to receiving the downlink information based on a discontinuous reception DRX parameter.

FIG. 13 shows a communication apparatus 1300 according to an embodiment of this application. The communication apparatus 1300 is configured to implement a function of the foregoing terminal or core network device. The apparatus may be a communication device or an apparatus used in the communication device. The communication device may be a terminal or a core network device. The apparatus used in the communication device may be a chip system or a chip in the communication device. The chip system may include a chip, or may include a chip and another discrete component.

The communication apparatus 1300 includes at least one processor 1310, configured to implement a processing function of a device (for example, the core network device or the terminal) in the methods provided in embodiments of this application. The communication apparatus 1300 may further include a communication interface 1320, configured to implement receiving and sending operations of the device (for example, the core network device or the terminal) in the methods provided in embodiments of this application. In embodiments of this application, the communication interface may be a transceiver, a circuit, a bus, a module, or another type of communication interface, and is configured to communicate with another device through a transmission medium. For example, the communication interface 1320 is used by an apparatus in the communication apparatus 1300 to communicate with the another device. The processor 1310 receives and sends data through the communication interface 1320, and is configured to implement the methods in the foregoing method embodiments.

The communication apparatus 1300 may further include at least one memory 1330, configured to store program instructions and/or data. The memory 1330 is coupled to the processor 1310. The coupling in embodiments of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1330. The processor 1310 may execute the program instructions stored in the memory 1330. At least one of the at least one memory may be included in the processor.

In embodiments of this application, a specific connection medium between the communication interface 1320, the processor 1310, and the memory 1330 is not limited. In embodiments of this application, in FIG. 13, the memory 1330, the processor 1310, and the communication interface 1320 are connected through a bus. The bus is represented by a bold line in FIG. 13. A connection manner between other components is merely an example for description, and is not limited thereto. The bus may be classified into an address bus, a data bus, a control bus, and the like. For ease of representation, only one bold line is used for representation in FIG. 13, but this does not mean that there is only one bus or only one type of bus.

When the communication apparatus 1300 is specifically the apparatus used in the device (for example, the core network device or the terminal), for example, when the communication apparatus 1300 is specifically the chip or the chip system, the communication interface 1320 may output or receive a baseband signal. When the communication apparatus 1300 is specifically the device (for example, the core network device or the terminal), the communication interface 1320 may output or receive a radio frequency signal. In embodiments of this application, the processor may be a general-purpose processor, a digital signal processor, an application-specific integrated circuit, a field programmable gate array or another programmable logical device, a discrete gate or transistor logical device, or a discrete hardware component, and may implement or execute the methods, steps, and logical block diagrams disclosed in embodiments of this application. The general-purpose processor may be a microprocessor or any regular processor or the like. The steps of the method disclosed with reference to embodiments of this application may be directly performed by a hardware processor, or may be performed by using a combination of hardware in the processor and a software module.

It should be noted that the communication interface 1320 may be configured to perform a function of the interface unit 1201, and the processor 1310 may be configured to perform a function of the processing unit 1202. Details are not described herein.

When the communication apparatus is a chip used in the terminal, the chip in the terminal implements a function of the terminal in the foregoing method embodiments, and the chip in the terminal receives information from another network element; or the chip in the terminal sends information to another network element.

When the communication apparatus is a chip used in the core network device, the chip in the core network device implements a function of the core network device in the foregoing method embodiments. The chip in the core network device receives information from another network element; or the chip in the core network device sends information to another network element.

It may be understood that the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logical device, a transistor logical device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the core network device or the terminal. Certainly, the processor and the storage medium may alternatively exist in the terminal or the access network device as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD).

In embodiments of this application, unless otherwise stated or there is a logical conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions, and when the computer-executable instructions are executed, the methods performed by the terminal or the access network device in the foregoing method embodiments are implemented.

An embodiment of this application further provides a computer program product. The computer program product includes a computer program, and when the computer program is executed, the methods performed by the terminal or the access network device in the foregoing method embodiments are implemented.

An embodiment of this application further provides a communication system. The communication system includes a terminal or an access network device. The terminal is configured to perform the method performed by the terminal in the foregoing method embodiments. The access network device is configured to perform the methods performed by the access network device in the foregoing method embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that embodiments described in this specification all belong to example embodiments, and the involved actions and modules are not necessarily required by this application.

The descriptions of embodiments provided in this application may refer to each other, and the descriptions of embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A communication method, applied to a terminal, wherein the method comprises:
sending a registration request message;
receiving a registration accept message, wherein the registration accept message carries first indication information, and the first indication information indicates to return a registration complete message after the registration accept message is received; and
sending the registration complete message based on the registration accept message.

2. The method according to claim 1, wherein the registration request message carries capability information of the terminal, and the capability information indicates support returning a registration complete message after a registration accept message is received.

3. The method according to claim 1 or 2, wherein the registration accept message further carries a paging early indication with paging subgrouping assistance PEIPS parameter or an extended discontinuous reception eDRX parameter.

4. A communication method, applied to a core network device, wherein the method comprises:
receiving a registration request message from a terminal;
sending a registration accept message to the terminal based on the registration request message, wherein the registration accept message carries first indication information, and the first indication information indicates to return a registration complete message after the registration accept message is received;
starting a timer; and
if the registration complete message from the terminal is received before the timer expires, stopping the timer; or
if the registration complete message from the terminal fails to be received when the timer expires, retransmitting the registration accept message.

5. The method according to claim 4, wherein the registration request message carries capability information of the terminal, and the capability information indicates support returning a registration complete message after a registration accept message is received.

6. The method according to claim 5, wherein starting the timer comprises:
if the registration request message carries the capability information of the terminal, and the registration accept message carries the first indication information, starting the timer.

7. The method according to any one of claims 4 to 6, wherein the registration accept message further carries a paging early indication with paging subgrouping assistance PEIPS parameter or an extended discontinuous reception eDRX parameter.

8. A communication method, applied to a terminal, wherein the method comprises:
sending a registration request message;
receiving a registration accept message; and
if the registration accept message carries a paging early indication with paging subgrouping assistance PEIPS parameter or an extended discontinuous reception eDRX parameter, sending a registration complete message.

9. The method according to claim 8, wherein the method further comprises:
determining that the registration accept message carries the PEIPS parameter or the eDRX parameter.

10. The method according to claim 8 or 9, wherein the registration request message carries capability information of the terminal, and the capability information indicates support returning a registration complete message after a registration accept message that carries a PEIPS parameter or an eDRX parameter is received.

11. A communication method, applied to a core network device, wherein the method comprises:
receiving a registration request message from a terminal;
sending a registration accept message to the terminal based on the registration request message;
if the registration accept message carries a paging early indication with paging subgrouping assistance PEIPS parameter or an extended discontinuous reception eDRX parameter, starting a timer; and
if a registration complete message from the terminal is received before the timer expires, stopping the timer; or
if a registration complete message from the terminal fails to be received when the timer expires, retransmitting the registration accept message.

12. The method according to claim 11, wherein the registration request message carries capability information of the terminal, and the capability information indicates support returning a registration complete message after a registration accept message that carries a PEIPS parameter or an eDRX parameter is received.

13. The method according to claim 12, wherein if the registration accept message carries the paging early indication with paging subgrouping assistance PEIPS parameter or the extended discontinuous reception eDRX parameter, starting the timer comprises:
if the registration request message carries the capability information of the terminal, and the registration accept message carries the PEIPS parameter or the eDRX parameter, starting the timer.

14. A communication method, applied to a terminal, wherein the method comprises:
sending a registration request message, wherein the registration request message carries capability information of the terminal, and the capability information indicates support paging early indication with paging subgrouping assistance PEIPS;
starting a timer; and
if a registration accept message fails to be received when the timer expires, monitoring a paging message of the terminal on a paging occasion in a discontinuous reception DRX cycle.

15. The method according to claim 14, wherein before sending the registration request message, the method further comprises:
monitoring the paging message of the terminal in a paging subgroup, wherein the paging subgroup is a user equipment identifier UE_ID subgroup or a PEIPS paging subgroup, and the terminal is located in the paging subgroup.

16. A communication apparatus, comprising a unit configured to perform the method according to any one of claims 1 to 3, or comprising a unit configured to perform the method according to any one of claims 4 to 7, or comprising a unit configured to perform the method according to any one of claims 8 to 10, or comprising a unit configured to perform the method according to any one of claims 11 to 13, or comprising a unit configured to perform the method according to either of claims 14 and 15.

17. A communication apparatus, comprising a processor and a memory, wherein the processor is coupled to the memory, and the processor is configured to implement the method according to any one of claims 1 to 3, or the processor is configured to implement the method according to any one of claims 4 to 7, or the processor is configured to implement the method according to any one of claims 8 to 10, or the processor is configured to implement the method according to any one of claims 11 to 13, or the processor is configured to implement the method according to either of claims 14 and 15.

18. A chip, comprising a processor and an interface, wherein the processor is coupled to the interface, the interface is configured to receive or output a signal, and the processor is configured to execute code instructions, so that the method according to any one of claims 1 to 3 is performed, or the method according to any one of claims 4 to 7 is performed, or the method according to any one of claims 8 to 10 is performed, or the method according to any one of claims 11 to 13 is performed, or the method according to either of claims 14 and 15 is performed.

19. A computer-readable storage medium, wherein the computer-readable storage medium stores computer-executable instructions, and when the computer-executable instructions are invoked by a computer, the computer is enabled to perform the method according to any one of claims 1 to 3, or the computer is enabled to perform the method according to any one of claims 4 to 7, or the computer is enabled to perform the method according to any one of claims 8 to 10, or the computer is enabled to perform the method according to any one of claims 11 to 13, or the computer is enabled to perform the method according to either of claims 14 and 15.

20. A computer program product, wherein the computer program product comprises computer program code, and when the computer program code is run, the method according to any one of claims 1 to 3 is performed, or the method according to any one of claims 4 to 7 is performed, or the method according to any one of claims 8 to 10 is performed, or the method according to any one of claims 11 to 13 is performed, or the method according to either of claims 14 and 15 is performed.
